(19) Europäisches Patentamt / European Patent Office / Office européen des brevets

(11) **EP 2 109 178 A1**

(12) **DEMANDE DE BREVET EUROPEEN**

(43) Date de publication:
**14.10.2009 Bulletin 2009/42**

(51) Int Cl.:
***H01M 10/50*** *(2006.01)*

(21) Numéro de dépôt: **09157415.2**

(22) Date de dépôt: **06.04.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **10.04.2008 FR 0852396**

(71) Demandeur: **PEUGEOT CITROËN AUTOMOBILES S.A.**
**78140 Vélizy Villacoublay (FR)**

(72) Inventeur: **Ragot, Franck**
**75009, PARIS (FR)**

(54) **Procede de commande d'un dispositif de thermoregulation d'une batterie d'alimentation d'un vehicule a traction electrique**

(57) La présente invention se rapporte à un procédé de commande d'un dispositif de thermorégulation d'une batterie d'alimentation d'un véhicule à traction électrique.

Dans l'invention, le procédé de commande (10) d'un dispositif de thermorégulation d'une batterie d'alimentation d'un véhicule à traction électrique refroidie au moyen d'un fluide caloriporteur mis en circulation par des moyens pour appliquer un débit de circulation (14) dudit fluide caloriporteur commandés par ledit dispositif de thermorégulation, comporte :

- une première étape de détermination d'un écart entre la température (11) de la batterie d'alimentation et la température (13) dudit fluide caloriporteur ;
- une deuxième étape de détermination dudit débit de circulation (14) à appliquer, pour ledit écart déterminé à ladite première étape, ledit débit étant déterminé en fonction de ladite température (11) de la batterie d'alimentation et de la vitesse (12) de déplacement du véhicule.

L'invention trouve une application immédiate dans le domaine des véhicules automobiles.

Fig. 1

**Description**

La présente invention concerne un procédé de commande d'un dispositif de thermorégulation d'une batterie d'alimentation d'un véhicule à traction électrique.

Plus particulièrement, l'invention est relative à un procédé de commande d'un dispositif de thermorégulation d'une batterie d'alimentation d'un véhicule dont la motorisation fait appel à au moins une motorisation électrique.

Ces véhicules à motorisation électrique ou à motorisation hybride comportant au moins une source motrice électrique comportent, de façon connue, une batterie capable d'effectuer des cycles de charge/décharge et un moteur électrique utilisant l'énergie électrique de la batterie pour fournir une énergie motrice au véhicule.

Lors de l'utilisation de la batterie et notamment lors des cycles de charge/décharge, la batterie produit de la chaleur provenant notamment du comportement résistif. Cependant, les performances de ce genre de batterie dépendent fortement de sa température de fonctionnement.

En effet, lorsque la température de fonctionnement est élevée, cela provoque d'une part un vieillissement accéléré et une autodécharge importante, et d'autre part, pour des températures supérieures, l'interdiction du fonctionnement de la batterie pour éviter toute dégradation irréversible.

Lorsque la température ambiante est supérieure à la température optimale de fonctionnement de la batterie, l'air extérieur ne peut plus être utilisé comme une source de refroidissement nécessaire à l'évacuation de la chaleur produite par les éléments d'accumulateurs de la batterie.

C'est pourquoi, un dispositif de refroidissement de la batterie d'alimentation est commandé selon un procédé qui vise à refroidir la batterie lorsque sa température interne est trop élevée par rapport à une température d'utilisation.

A cet effet, un fluide caloporteur circule dans un circuit de refroidissement de la batterie, de manière à provoquer des transferts de chaleur entre la batterie et le fluide caloporteur et ainsi réduire la température de la batterie.

De façon connue, un procédé de commande de refroidissement ou de thermorégulation de batterie d'alimentation pilote le dispositif de refroidissement en fonction de la température de la batterie ainsi que de la température du fluide caloriporteur. Cependant, les dispositifs assurant le débit de fluide caloriporteur, tels que par exemple une pompe ou un ventilateur, ont un certain impact sur l'acoustique ou le confort vibratoire ressenti dans l'habitacle par les passagers. En effet, plus le débit du fluide caloriporteur à fournir est important, plus les bruits et vibrations parasites provenant de dispositifs assurant le débit augmentent. Cette nuisance acoustique est notamment importante lorsque le véhicule est à l'arrêt ou avec une faible vitesse de roulement ; dans cette situation le niveau sonore de l'habitacle est sensiblement réduit, n'ayant pas ou très peu de bruits de roulements, de bruits produits par le moteur thermique, et de bruits aérodynamiques.

Dans ce contexte, l'invention vise à fournir un procédé de commande d'un dispositif de thermorégulation d'une batterie d'alimentation d'un véhicule à traction électrique permettant un refroidissement de la batterie d'alimentation efficace tout en préservant les passagers de nuisances acoustiques.

A cette fin, l'invention propose un procédé de commande d'un dispositif de thermorégulation d'une batterie d'alimentation d'un véhicule à traction électrique refroidie au moyen d'un fluide caloriporteur mis en circulation par des moyens pour appliquer un débit de circulation dudit fluide caloriporteur commandés par ledit dispositif de thermorégulation, ledit procédé de commande comportant :

- une première étape de détermination d'un écart entre la température de la batterie d'alimentation et la température dudit fluide caloriporteur ;
- une deuxième étape de détermination dudit débit de circulation à appliquer, pour ledit écart déterminé à ladite première étape, ledit débit étant déterminé en fonction de ladite température de la batterie d'alimentation et de la vitesse de déplacement du véhicule.

Selon une autre caractéristique, le procédé de commande est tel qu'il comporte une étape d'acquisition de ladite température (11) de ladite batterie d'alimentation, de ladite température dudit fluide caloriporteur et de ladite vitesse de déplacement du véhicule.

Selon une autre caractéristique, le procédé de commande est tel que ladite étape d'acquisition est réalisé de façon continue.

Selon une autre caractéristique, le procédé de commande est tel qu'une augmentation de ladite température de batterie d'alimentation implique une augmentation dudit débit de circulation.

Selon une autre caractéristique, le procédé de commande est tel qu'une augmentation de ladite vitesse de déplacement du véhicule implique une augmentation dudit débit de circulation.

Selon une autre caractéristique, le procédé de commande est tel qu'une augmentation dudit écart déterminé à ladite première étape implique une diminution dudit débit de circulation.

Selon une autre caractéristique, le procédé de commande est tel que le débit de circulation est déterminé selon la relation :

$$ D = k_3 . V . \left( k_1 . \frac{(T_{bat} - T_{flux_{in}})}{(T_{flux_{out}} - T_{flux_{in}})} \right)^{(1-k_2)} $$

où :

D est ledit débit de circulation ;

V est ladite vitesse de déplacement du véhicule ;

$T_{bat}$ est ladite température de la batterie d'alimentation ;

$T_{flux\ in}$ est ladite température dudit fluide caloriporteur en entrée d'un circuit de refroidissement ;

$T_{flux\ out}$ est ladite température dudit fluide caloriporteur en sortie dudit circuit de refroidissement ;

k1 est un premier coefficient géométrique ;

k2 est un deuxième coefficient géométrique ;

k3 est un coefficient pondérant ladite vitesse de déplacement du véhicule.

Selon une autre caractéristique, le procédé de commande est tel qu'un dispositif de thermorégulation comporte des moyens pour la mise en oeuvre d'un procédé de commande.

D'autres caractéristiques et avantages de l'invention ressortiront plus clairement de la description qui en est donnée ci-dessous, à titre indicatif et nullement limitatif, en référence aux figures annexées, parmi lesquelles :

- la figure 1 est un schéma fonctionnel du procédé de commande d'un dispositif de thermorégulation d'une batterie d'alimentation d'un véhicule à traction électrique selon l'invention ;

- la figure 2 est un graphique illustrant un exemple d'une répartition du débit du fluide caloriporteur générée par un procédé de commande selon l'invention, en fonction de la vitesse du véhicule et de la température de la batterie d'alimentation ;

- la figure 3 est un graphique illustrant un deuxième exemple d'une répartition du débit du fluide caloriporteur générée par un procédé de commande selon l'invention, en fonction de la vitesse du véhicule et de la température de la batterie d'alimentation ;Dans toutes les figures, les éléments communs portent les mêmes numéros de référence sauf précision contraire.

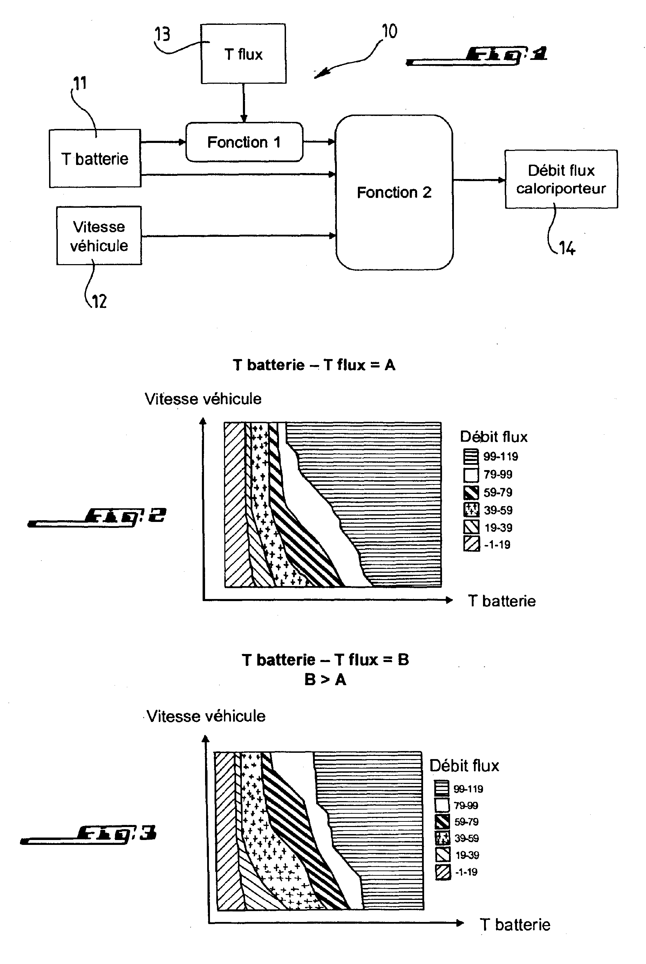

La figure 1 est un schéma fonctionnel du procédé de commande 10 d'un dispositif de thermorégulation d'une batterie d'alimentation d'un véhicule à traction électrique selon l'invention.

Le procédé de commande 10 permet de gérer le refroidissement d'une batterie d'alimentation au moyen d'un dispositif de thermorégulation (non représenté) associé à :

- un circuit de refroidissement adjacent à au moins une paroi de la batterie d'alimentation ou intégré à la batterie ;

- un fluide caloriporteur circulant dans le circuit de refroidissement ;

- un moyen du type pompe ou ventilateur permettant de générer un flux du fluide caloriporteur ou flux calorifique dans le circuit de refroidissement.

Le procédé de commande 10, illustré selon le schéma fonctionnel en référence à la figure 1, utilise différentes informations telles que la température 11 de la batterie d'alimentation, la température 13 du fluide caloriporteur ou température du flux calorifique, et la vitesse 12 de déplacement du véhicule comme données d'entrées pour déterminer au moyen d'une stratégie de commande un débit 14 de flux calorifique.

Le procédé de commande 10 consiste dans une première étape à comparer deux informations : la température 11 de la batterie d'alimentation avec la température 13 du flux calorifique au moyen d'une première fonction 1.

Le procédé de commande 10 consiste dans une deuxième étape à déterminer un débit du flux calorifique à partir des données d'entrées indiquant la vitesse de déplacement du véhicule 12, la température de la batterie d'alimentation 11 ainsi que l'information de sortie résultant de la première étape.

De cette façon le procédé de commande 10 permet de fournir un débit du flux calorifique 14 apte au refroidissement de la batterie d'alimentation en prenant en compte les contraintes environnantes telles que la vitesse du véhicule ainsi que l'écart de température entre la température de la batterie 11 et la température du flux calorifique 13.

Le procédé comporte également une étape d'acquisition des données d'entrées de température 11 et 13 et de vitesse 12 qui se réalise de façon continue, c'est-à-dire par exemple une acquisition toutes les 100 millisecondes.

Le procédé de commande 10 détermine le débit 14 du flux calorifique à appliquer selon un mode préférentiel illustré par la loi suivante :

$$D = k_3.V.\left( k_1.\frac{(T_{bat} - T_{flux_{in}})}{(T_{flux_{out}} - T_{flux_{in}})} \right)^{(1-k_2)}$$

où :

D est le débit 14 du flux calorifique ;

V est la vitesse 12 de déplacement du véhicule ;

$T_{bat}$ est la température 11 de la batterie d'alimentation ;

$T_{flux\ in}$ est la température 13 du flux calorifique en entrée du circuit de refroidissement ;

$T_{flux\ out}$ est la température 13 du flux calorifique en sortie du circuit de refroidissement ;

k1 est un premier coefficient géométrique ;

k2 est un deuxième coefficient géométrique ;

k3 est un coefficient pondérant la vitesse véhicule.

Ainsi, le procédé de commande 10 permet d'ajuster le débit 14 du flux calorifique selon les différents paramètres définis précédemment suivant les principes décrits ci-dessous :

- lorsque la température 11 de la batterie d'alimentation est élevée, le procédé de commande 10 augmente le débit 14 du flux calorifique permettant un meilleur refroidissement de la batterie d'alimentation ;
- lorsque l'écart entre la température de la batterie d'alimentation et la température du flux calorifique est élevé, le refroidissement de la batterie au moyen du flux calorifique est plus efficace, le procédé de commande 10 réduit alors le débit 14 du flux calorifique ;
- lorsque la vitesse 12 du véhicule est élevée, le niveau sonore de l'habitacle permet d'occulter partiellement ou complètement le bruit du dispositif de thermorégulation, le procédé de commande 10 peut augmenter le débit 14 du flux calorifique sans dégradation de la qualité acoustique de l'habitacle.

De cette façon le procédé de commande 10 définit le débit 14 du flux calorifique en fonction de la vitesse du véhicule et en fonction de la température de la batterie d'alimentation selon l'écart de température entre la batterie d'alimentation et la température du flux calorifique.

La figure 2 illustre sous la forme d'un graphique un premier exemple d'une répartition du débit 14 du flux calorifique appliquée par le procédé de commande 10 en fonction de la vitesse 12 du véhicule et de la température 11 de la batterie d'alimentation pour un certain écart A entre la température 11 de la batterie d'alimentation et la température 13 du flux calorifique.

Pour un écart défini A, chaque condition de vitesse 12 du véhicule et de température 11 de la batterie d'alimentation correspond à un débit 14 du flux calorifique. L'ensemble des combinaisons vitesse 12 du véhicule/température 11 de la batterie d'alimentation est représenté sur le graphique en référence à la figure 2 par un débit 14 de flux calorifique. Dans un souci de représentativité, les débits 14 du flux calorifique sont répartis selon 6 plages de valeurs : 1-19 $m^3$/h ; 19-39 $m^3$/h ; 39-59 $m^3$/h ; 59-79 $m^3$/h ; 79-99 $m^3$/h ; 99-119 $m^3$/h.

Il est à noter que la répartition du débit 14 avec des plages de valeurs plus petites, par exemple de 1 à 5 $m^3$/h, permettrait de préciser le graphique et la valeur du débit 14 pour chaque situation de température du flux calorifique et de vitesse du véhicule.

De plus, un mode préférentiel de représentativité du débit 14 du flux calorifique est une représentation repartie de 0 $m^3$/h à 150 $m^3$/h selon les plages de valeurs : 1-38 $m^3$/h ; 39-75 $m^3$/h ; 76-113 $m^3$/h ; 114-149 $m^3$/h.

La figure 3 illustre sous la forme d'un graphique un deuxième exemple de répartition du débit 14 du flux calorifique en fonction de la vitesse 12 du véhicule et de la température 11 de la batterie d'alimentation pour un écart B entre la température 11 de la batterie d'alimentation et la température 13 du flux calorifique supérieure à l'écart de température A illustré en référence à la figure 2.

L'écart de température B étant supérieur à l'écart A, le refroidissement de la batterie par le flux calorifique est plus efficace. La répartition des différentes valeurs de débit est alors ajustée afin de garantir au maximum un faible débit du flux calorifique pour une faible vitesse du véhicule et un débit plus important pour une température de batterie élevée.

Cet ajustement est facilement visible en effectuant par exemple une comparaison entre la figure 2 et la figure 3 pour une valeur fixe de vitesse et de température.

De façon similaire à la figure précédente, les débits 14 du flux calorifique sont répartis selon 6 plages de valeurs : 1-19 $m^3$/h ; 19-39 $m^3$/h ; 39-59 $m^3$/h ; 59-79 $m^3$/h ; 79-99 $m^3$/h ; 99-119 $m^3$/h.

Ainsi, le procédé de commande selon l'invention propose une gestion active du refroidissement d'une batterie d'alimentation d'un véhicule à traction électrique sans dégradation du niveau sonore de l'habitacle.

Selon les différents paramètres de température tels que la température de la batterie et la température du flux calorifique et la vitesse du véhicule, le procédé de commande fournit au moyen du dispositif de thermorégulation un débit de flux calorifique adapté à chaque situation en privilégiant le confort acoustique des passagers.

Les autres avantages de l'invention sont notamment les suivants :

- la gestion active du refroidissement permet de réduire la consommation énergétique ;
- la gestion active du refroidissement permet d'augmenter la durée de vie de la batterie.

**Revendications**

1. Procédé de commande (10) d'un dispositif de thermorégulation d'une batterie d'alimentation d'un véhicule à traction électrique refroidie au moyen d'un fluide caloriporteur mis en circulation par des moyens pour appliquer un débit de circulation (14) dudit fluide caloriporteur commandés par ledit dispositif de thermorégulation, ledit procédé de commande (10) comportant :

- une première étape de détermination d'un écart entre la température (11) de la batterie d'alimentation et la température (13) dudit fluide caloriporteur ;
- une deuxième étape de détermination dudit débit de circulation (14) à appliquer, pour ledit écart déterminé à ladite première étape, ledit débit étant déterminé en fonction de ladite température (11) de la batterie d'alimentation et de la vitesse (12) de déplacement du véhicule.

**2.** Procédé de commande (10) d'un dispositif de thermorégulation d'une batterie d'alimentation d'un véhicule à traction électrique selon la revendication 1 comportant une étape d'acquisition de ladite température (11) de ladite batterie d'alimentation, de ladite température (13) dudit fluide caloriporteur et de ladite vitesse de déplacement (12) du véhicule.

**3.** Procédé de commande (10) d'un dispositif de thermorégulation d'une batterie d'alimentation d'un véhicule à traction électrique selon la revendication 2 **caractérisé en ce que** ladite étape d'acquisition est réalisé de façon continue.

**4.** Procédé de commande (10) d'un dispositif de thermorégulation d'une batterie d'alimentation d'un véhicule à traction électrique selon l'une des revendications 1 à 3 **caractérisé en ce qu'**une augmentation de ladite température (11) de batterie d'alimentation implique une augmentation dudit débit de circulation (14).

**5.** Procédé de commande (10) d'un dispositif de thermorégulation d'une batterie d'alimentation d'un véhicule à traction électrique selon l'une des revendications 1 à 4 **caractérisé en ce qu'**une augmentation de ladite vitesse (12) de déplacement du véhicule implique une augmentation dudit débit de circulation (14).

**6.** Procédé de commande (10) d'un dispositif de thermorégulation d'une batterie d'alimentation d'un véhicule à traction électrique selon l'une des revendications 1 à 5 **caractérisé en ce qu'**une augmentation dudit écart déterminé à ladite première étape implique une diminution dudit débit de circulation (14).

**7.** Procédé de commande (10) d'un dispositif de thermorégulation d'une batterie d'alimentation d'un véhicule à traction électrique selon l'une des revendications 1 à 6 **caractérisé en ce que** ledit débit de circulation (14) est déterminé selon la relation :

$$D = k_3 . V . \left( k_1 . \frac{(T_{bat} - T_{flux_{in}})}{(T_{flux_{out}} - T_{flux_{in}})} \right)^{(1-k_2)}$$

où :

D est ledit débit de circulation (14) ;
V est ladite vitesse (12) de déplacement du véhicule ;
$T_{bat}$ est ladite température (11) de la batterie d'alimentation ;
$T_{flux\ in}$ est ladite température (13) dudit fluide caloriporteur en entrée d'un circuit de refroidissement ;
$T_{flux\ out}$ est ladite température (13) dudit fluide caloriporteur en sortie dudit circuit de refroidissement ;
k1 est un premier coefficient géométrique ;
k2 est un deuxième coefficient géométrique ;
k3 est un coefficient pondérant ladite vitesse (12) de déplacement du véhicule.

**8.** Dispositif de thermorégulation **caractérisé en ce qu'**il comporte des moyens pour la mise en oeuvre d'un procédé de commande (10) selon l'une des revendications 1 à 7.

**Fig.1**

T flux — 13

10

T batterie — 11

Fonction 1

Vitesse véhicule — 12

Fonction 2

Débit flux caloriporteur — 14

**T batterie – T flux = A**

Vitesse véhicule

**Fig.2**

Débit flux
- 99-119
- 79-99
- 59-79
- 39-59
- 19-39
- -1-19

T batterie

**T batterie – T flux = B**
**B > A**

Vitesse véhicule

**Fig.3**

Débit flux
- 99-119
- 79-99
- 59-79
- 39-59
- 19-39
- -1-19

T batterie

Europäisches
Patentamt

European
Patent Office

Office européen
des brevets

## RAPPORT DE RECHERCHE EUROPEENNE

Numéro de la demande

EP 09 15 7415

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2003/118891 A1 (SAITO MITSUNOBU [JP] ET AL) 26 juin 2003 (2003-06-26)<br>* abrégé *<br>* revendications 1-12 *<br>* alinéas [0002] - [0009] *<br>----- | | INV.<br>H01M10/50 |
| A | FR 2 884 058 A (VALEO SYSTEMES THERMIQUES [FR]) 6 octobre 2006 (2006-10-06)<br>* revendications 1-26 *<br>----- | | |
| A | US 5 524 681 A (DAVIES TIMOTHY J [US] ET AL) 11 juin 1996 (1996-06-11)<br>* colonne 2, ligne 50 - colonne 3, ligne 20 *<br>----- | | |
| A | US 5 834 132 A (HASEGAWA OSAMU [JP] ET AL) 10 novembre 1998 (1998-11-10)<br>* colonne 10, ligne 10 - ligne 65 *<br>----- | | |
| X | JP 2007 200780 A (TOYOTA MOTOR CORP) 9 août 2007 (2007-08-09)<br>* abrégé * | 1-8 | DOMAINES TECHNIQUES RECHERCHES (IPC) |
| P,X | & EP 1 983 603 A (TOYOTA MOTOR CO LTD [JP]) 22 octobre 2008 (2008-10-22)<br>* alinéas [0002] - [0004] *<br>* alinéa [0015] *<br>* alinéas [0029] - [0050] *<br>----- | 1-8 | H01M |
| X | JP 2005 184979 A (SANYO ELECTRIC CO) 7 juillet 2005 (2005-07-07)<br>* abrégé *<br>* alinéas [0016], [0025] - [0031] *<br>----- | 1-5,7,8 | |

Le présent rapport a été établi pour toutes les revendications

| Lieu de la recherche | Date d'achèvement de la recherche | Examinateur |
|---|---|---|
| Munich | 2 juillet 2009 | Goldbacher, Ute |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    .......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 7415

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-07-2009

| Document brevet cité<br>au rapport de recherche | | Date de<br>publication | Membre(s) de la<br>famille de brevet(s) | | Date de<br>publication |
|---|---|---|---|---|---|
| US 2003118891 | A1 | 26-06-2003 | JP<br>JP | 4053289 B2<br>2003178815 A | 27-02-2008<br>27-06-2003 |
| FR 2884058 | A | 06-10-2006 | JP | 2006296193 A | 26-10-2006 |
| US 5524681 | A | 11-06-1996 | AUCUN | | |
| US 5834132 | A | 10-11-1998 | JP<br>JP | 3451141 B2<br>8138762 A | 29-09-2003<br>31-05-1996 |
| JP 2007200780 | A | 09-08-2007 | CN<br>EP<br>WO<br>KR<br>US | 101366144 A<br>1983603 A1<br>2007086231 A1<br>20080091495 A<br>2009024252 A1 | 11-02-2009<br>22-10-2008<br>02-08-2007<br>13-10-2008<br>22-01-2009 |
| EP 1983603 | A | 22-10-2008 | CN<br>JP<br>WO<br>KR<br>US | 101366144 A<br>2007200780 A<br>2007086231 A1<br>20080091495 A<br>2009024252 A1 | 11-02-2009<br>09-08-2007<br>02-08-2007<br>13-10-2008<br>22-01-2009 |
| JP 2005184979 | A | 07-07-2005 | AUCUN | | |

EPO FORM P0460

Pour tout renseignement concernant cette annexe : voir Journal Officiel de l'Office européen des brevets, No.12/82